# EUROPÄISCHE PATENTSCHRIFT

(11) **EP 2 193 946 B1**
(45) Veröffentlichungstag und Bekanntmachung des Hinweises auf die Patenterteilung: **07.11.2012**
(21) Anmeldenummer: 09169876.1
(22) Anmeldetag: 09.09.2009
(51) Int. Cl.: B60J 10/04

(54) **Dichtungsprofil**
Seal profile
Profil d'étanchéité

(30) Priorität: 03.12.2008 DE 102008060288
(43) Veröffentlichungstag der Anmeldung: 09.06.2010
(73) Patentinhaber: CSA Germany GmbH & Co. KG, 68535 Edingen-Neckarhausen (DE)
(72) Erfinder: Stüber, Bernd, 88099 Neukirch (DE); Wipperfürth, Christian, 68199 Mannheim (DE)
(74) Vertreter: Flügel Preissner Kastel Schober

(56) Entgegenhaltungen:
- EP-A- 1 201 476
- WO-A-03/080378
- FR-A- 1 483 170
- FR-A- 2 613 414
- JP-A- 8 310 243
- JP-A- 10 226 238

## Beschreibung

Die Erfindung betrifft ein Dichtungsprofil mit einem im Wesentlichen U-förmigen Querschnitt zur Aufnahme und Abdichtung eines verschiebbaren Schließelements, insbesondere für ein Kraftfahrzeug. Das Dichtungsprofil weist einen Basisabschnitt und wenigstens einen Schenkelabschnitt auf. Von dem Basisabschnitt und/odet dem Schenkelabschnitt ragt wenigstens eine Dichtlippe zur Abdichtung des Schließelements ab.

Derartige Dichtungsprofile sind aus der WO 2004/050408 A1 bekannt und werden häufig eingesetzt, um verschiebbare Schließelemente an ihrem Randbereich abzudichten und zu lagern. Um eine Grundsteifigkeit des Dichtungsprofils zu gewährleisten und gleichzeitig eine zuverlässige Abdichtung des Schließelements zu erreichen, weisen die Dichtungsprofile eine feste Grundstruktur, bestehend aus einem Basisabschnitt und wenigstens einem Schenkelabschnitt, auf. An dieser Grundstruktur werden flexible Dichtlippen befestigt, die an das Schließelement anlegbar sind und dieses aufgrund ihrer Biegsamkeit sicher abdichten.

Auch aus den JP 08-310243 und FR 1 483 170 A ist eine Vielzahl von Dichtungsprofilen für die Abdichtung von Kraftfahrzeugfenstern bekannt.

Eine weitere wichtige Funktion eines Dichtungsprofils der eingangs genannten Art ist die Lagerung des Schließelements. Ist das Dichtungsprofil Vibrationen ausgesetzt, beispielsweise in einem Kraftfahrzeug, so ist dafür Sorge zu tragen, dass das Schließelement fest und sicher gelagert ist und unter anderem auch eine Geräuschbelästigung vermieden wird.

Um diese Doppelfunktion erfüllen zu können, weisen Dichtungsprofile der eingangs genannten Art mehrere Dichtlippen auf. Die Schließelemente werden bei ihrer Montage oftmals relativ zu dem Dichtungsprofil und somit auch zu den Dichtlippen verschoben, während die Dichtlippen, unter Umständen mit großem Druck, an dem Schließelement anliegen. Dadurch ist es möglich, dass die im Vergleich zu dem restlichen Dichtungsprofil sehr elastischen und weichen Dichtlippen sich verformen, insbesondere, dass sich Falten ausbilden oder dass die Dichtlippe beiseite geschoben und hintergriffen wird und somit das Schließelement unmittelbar an der Grundstruktur des Dichtungsprofils anliegt.

Die Erfindung geht auf die **Aufgabe** zurück, ein Dichtungsprofil der eingangs genannten Art so weiterzubilden, dass auf einfache Art und Weise eine sichere Abdichtung und Lagerung des Schließelements sichergestellt wird.

Zur **Lösung** dieser Aufgabe wird ein Dichtungsprofil gemäß Anspruch 1 vorgeschlagen. Vorteilhafte Weiterbildungen der Erfindung sind Gegenstand der Unteransprüche.

Das erfindungsgemäße Dichtungsprofil zeichnet sich dadurch aus, dass die Dichtlippe im Bereich eines distalen Endes, das an das Schließelement anlegbar ist, mittels eines mechanischen Haltemittels, das geeignet ist, von außen in das Dichtungsprofil eingefügt zu werden, in einer vorbestimmten Lage an dem Basisabschnitt und/oder an dem Schenkelabschnitt wenigstens stellenweise fixiert ist. Mechanische Haltemittel können einfach und kostengünstig von außen in das Dichtungsprofil eingefügt werden, wohingegen die Applizierung eines chemischen Haltemittels, beispielsweise eines Klebstoffs, es nötig machte, den Klebstoff exakt an schwer zugänglichen Stellen des Dichtungsprofils aufzutragen. Der im Wesentlichen U-förmige Querschnitt des Dichtungsprofils dient dazu, das Schließelement an seinem Rand zu umschließen und sicherer lagern und abdichten zu können.

Das mechanische Haltemittel kann einen Faden aufweisen, mittels dem die Dichtlippe an den Basisabschnitt und/oder den Schenkelabschnitt angenäht ist. Derartige Nähte sind kostengünstig herstellbar. Des Weiteren sind sie einfach zu positionieren und bieten eine große Festigkeit.

Das mechanische Haltemittel kann alternativ oder zusätzlich einen Clip aufweisen. Auch diese Befestigung hat den Vorteil, dass sie keinen Zugang zu versteckten und schwer zugänglichen Teilen des Dichtungsprofils voraussetzt.

Das mechanische Haltemittel kann lösbar ausgebildet sein, um nach erfolgtem Einbau des Schließelements die fixierte Dichtlippe wieder zu lockern und ihr somit eine bessere Anpassung an die Oberfläche des Schließelements und dadurch eine verbesserte Abdichtung des Schließelements zu erlauben.

Das proximale Ende der Dichtlippe kann vorteilhaft mit dem Basisabschnitt und/oder dem Schenkelabschnitt stoffschlüssig verbunden sein. In diesem Fall ist die Herstellung eines solchen Dichtungsprofils einfacher, da die Dichtlippe mit dem Basisabschnitt und/oder dem Schenkelabschnitt gemeinsam hergestellt werden kann. Spätere Montageschritte für die Dichtlippe entfallen.

Die Dichtlippe kann eine in der Nähe des Basisabschnitts zur Abdichtung einer Front des Verschließelements vorgesehene Bodenlippe sein. Dadurch wird insbesondere eine gute Dämpfung von senkrecht zur Oberfläche der Front oszillierenden Schwingungen erreicht.

Die Dichtlippe weist zweckmäßigerweise einen reibungsvermindernden Überzug, insbesondere eine Beflockung, auf. Dies vermindert die Laufgeräusche bei Bewegung des verschiebbaren Schließelements beträchtlich.

Der Basisabschnitt und/oder die Schenkelabschnitte und/oder die Dichtlippen können extrudiert sein. Ein solches extrudiertes Profil muss zur Einhaltung der Maße lediglich korrekt abgelängt werden. Eine Herstellung in der exakt benötigten Länge ist nicht erforderlich. Wenigstens der Basisabschnitt kann einen Zugfaden aufweisen. Ein solcher Zugfaden vereinfacht die Herstellung des Dichtungsprofils mittels Extrusion.

Der Basisabschnitt und/oder die Schenkelabschnitte und/oder die Dichtlippen können aus einem elastomeren Werkstoff, insbesondere aus Ethylen-Propylen-Dien-Kautschuk (EPDM) oder einem thermoplastischen Elastomer (TPE), hergestellt sein. Elastomere eignen sich besonders für die Herstellung von Dichtungsprofilen.

Einzelheiten und weitere Vorteile des erfindungsgemäßen Dichtungsprofils ergeben sich aus der nachfolgenden Beschreibung bevorzugter Ausführungsbeispiele. In den die Ausführungsbeispiele lediglich schematisch darstellenden Zeichnungen zeigen im Einzelnen:
- Fig. 1: eine Seitenansicht eines Kraftfahrzeugs mit einem verschiebbaren Schließelement und einem Dichtungsprofil;
- Fig. 2: einen Schnitt entlang der Linie II-II in Fig. 1, wobei das Dichtungsprofil in ausgebauter Form dargestellt ist;
- Fig. 3: einen Schnitt wie in Fig. 2 durch eine erste Ausführungsform des Dichtungsprofils im eingebauten Zustand und
- Fig. 4: einen Schnitt wie in Fig. 2 durch eine zweite Ausführungsform des Dichtungsprofils.

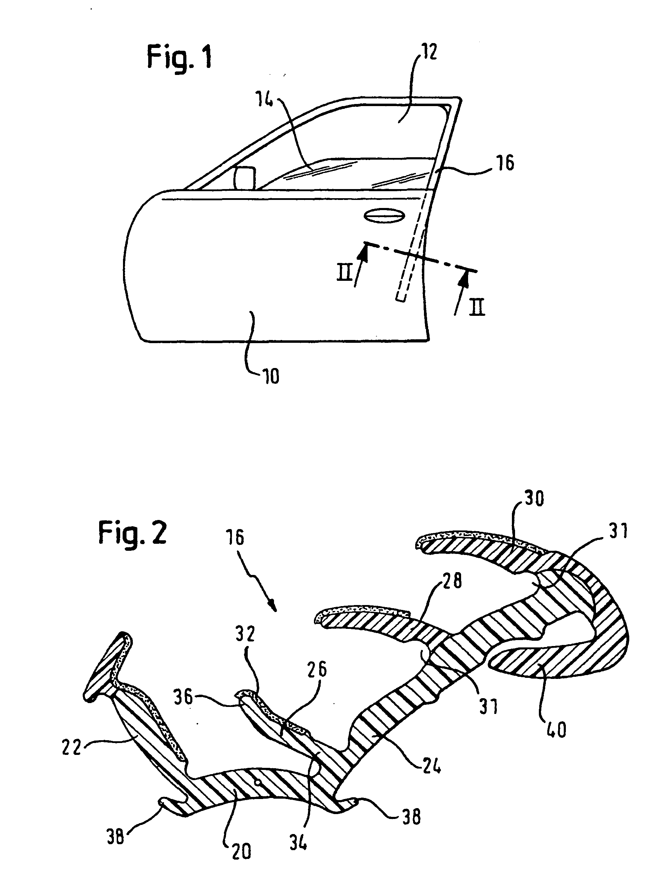

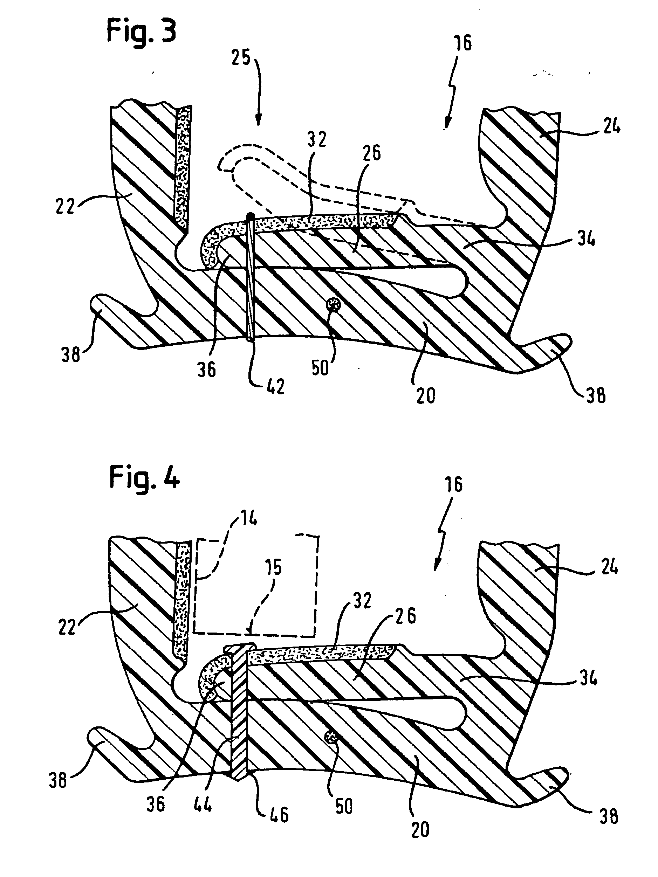

Die in Fig. 1 gezeigte Tür 10 eines Kraftfahrzeugs weist im Bereich einer Öffnung 12 ein verschiebbares Schließelement 14 auf, das hier durch eine Fensterscheibe gebildet ist. Die Fensterscheibe 14 wird von einem Dichtungsprofil 16 gelagert und geführt, das sich in einem Randbereich der Fensterscheibe 14 entlang des Randes erstreckt und diesen abdeckt. Wie in Fig. 4 gezeigt, wird eine Front 15 der Fensterscheibe 14 von dem Dichtungsprofil 16 umschlossen.

Das Dichtungsprofil 16, das in ausgebautem Zustand in Fig. 2 dargestellt ist, weist einen Basisabschnitt 20 sowie zwei Schenkelabschnitte 22, 24 auf. Von dem Schenkelabschnitt 24 ragen Dichtlippen 26, 28, 30 in Richtung auf den Schenkelabschnitt 22 zu und in einen Zwischenraum 25 hinein ab. Da sich die Dichtlippe 26 in der Nähe des Basisabschnitts 20 befindet, der im eingebauten Zustand des Dichtungsprofils 16 einen Boden bildet, wird die Dichtlippe 26 Bodenlippe genannt.

Die Bodenlippe 26, die Dichtlippen 28, 30 und der Schenkelabschnitt 22 sind mit einer Beflockung 32 zur Verminderung des Reibwiderstandes versehen. Diese Beflockung 32 ist auf der von dem Bodenabschnitt 20 abgewandten Seite der Bodenlippe 26 und der Dichtlippen 28, 30 aufgebracht, so dass die Fensterscheibe 14 beim Einsetzen als erstes mit gut gleitenden Flächen in Berührung kommt.

Die Bodenlippe 26 und die Dichtlippen 28, 30 haben jeweils ein zu dem Schenkelabschnitt 24 proximales Ende 34, an dem sie mit dem Schenkelabschnitt 24 verbunden sind. Ein distales Ende 36 der Bodenlippe 26 und der Dichtlippen 28, 30 ragt als freies Ende in den Zwischenraum 25 zwischen dem Schenkelabschnitt 22 und dem Schenkelabschnitt 24 ein. Die Bezeichnungen proximal und distal beziehen sich auf einen durch den Basisabschnitt 20 und die Schenkelabschnitte 22, 24 gebildeten Rahmen. Das proximale Ende 34 ist somit das Ende, das an dem Schenkelabschnitt 22, 24 oder dem Basisabschnitt 20 befestigt, also diesem nahe, ist. Das distale Ende 36 liegt von diesem Befestigungsort entfernt.

Die Dichtlippen 28, 30 ragen in einem Winkel von dem Schenkelabschnitt 24 ab, so dass sie gegenüber einer auf den Schenkelabschnitt 24 senkrechten Montage geneigt sind. Die Dichtlippen 28, 30 sind in Richtung auf den Bodenabschnitt 20 zu geneigt. Beim Einsetzen der Fensterscheibe 14 werden die Dichtlippen 28, 30 auf den Bodenabschnitt 20 zu verformt, wodurch sie um das proximale Ende 34 geschwenkt werden und an ihrem distalen Ende 36 im Wesentlichen parallel zu dem Schenkelabschnitt 24 verlaufen. Damit bei dieser Verformung keine zu hohen mechanischen Spannungen in dem Material der Dichtlippen 28, 30 entstehen, sind an den proximalen Enden 34 Aussparungen 31 vorgesehen.

Im Bereich des Basisabschnitts 20 sind Vorsprünge 38 vorgesehen, die durch Einhaken an einer Befestigungsschiene oder einem Befestigungsflansch befestigt werden können. Des Weiteren ist an dem Schenkelabschnitt 24 eine Haltelippe 40 vorgesehen, die der Befestigung des Dichtungsprofils 16 an einem Befestigungsflansch (nicht gezeigt) dient.

Um nun zu verhindern, dass die in der Ausführungsform von Fig. 2 frei schwebende Bodenlippe 26 beim Einbau der Fensterscheibe 14 verformt und möglicherweise hintergriffen wird, ist in der ersten erfindungsgemäßen Ausführungsform, die in Fig. 3 gezeigt ist, die Bodenlippe 26 mittels eines Fadens 42 in einer Position nahe des Basisabschnitts 20 fixiert. Dadurch wird wirksam verhindert, dass die Bodenlippe 26 sich verschiebt und dadurch faltet. Der gestrichelte Verlauf zeigt die Form der Bodenlippe 26, wenn diese ohne Fixierung durch den Faden 42 frei hängt.

Der Faden 42 wird vor dem Einbau des Dichtungsprofils 16 durch eine Nähvorrichtung entlang einer Längsrichtung des Dichtungsprofils 16 in das Dichtungsprofil eingenäht. Die Nähvorrichtung bringt den Faden 42 in kurzen Abschnitten von jeweils 8 bis 15 Stichen in das Dichtungsprofil 16 ein, zwischen denen mehrere Zentimeter Abstand sind. Diese Nahtabschnitte reichen gewöhnlich aus, um die Bodenlippe 26 zu fixieren.

Der Faden 42 kann so eingenäht sein, dass er sich nach Montage der Fensterscheibe 14 entfernen lässt. So wäre es beispielsweise möglich, einen Zugang vorzusehen, durch den der Faden 42 herausgezogen werden kann.

In einer zweiten Ausführungsform, die in Fig. 4 gezeigt ist, wird die Bodenlippe 26 mittels eines Clips 44, der Widerhaken 46 aufweist, an dem Basisabschnitt 20 befestigt. Hierzu wird durch den Basisabschnitt 20 und die Bodenlippe 26 ein Durchgangsloch gebohrt, durch das anschließend der Clip geführt wird. Durch die Widerhaken 46 bleibt der Clip zuverlässig in dem Basisabschnitt 20 verankert. Statt eines Clips 44 kann auch eine Schraube oder ähnliches eingesetzt werden.

Um eine verbesserte Schalldämmung zu erzielen, können der Faden 42 und/oder der Clip 44, wie oben bereits geschildert, die Bodenlippe 26 nur stellenweise fixieren. Dadurch ist die Positionierung der Bodenlippe 26 sichergestellt, während die nicht fixierten Bereiche der Bodenlippe 26 sich dichtungsfördernd und schallmindernd mit größerer Kraft flächig an die Fensterscheibe 14 anlegen können.

Das Vorsehen einer mechanischen Halteeinrichtung, also eines Fadens 42 oder eines Clips 44, ist auch zur Fixierung der Dichtlippen 28, 30 an dem Schenkelabschnitt 24 möglich. Die Bodenlippe 26 oder die Dichtlippe 28, 30 müssen also nicht an einem Basis- oder Schenkelabschnitt 20, 22, 24 befestigt werden, mit dem sie an ihrem proximalen Ende 34 verbunden sind.

Die Bodenlippe 26 und die Dichtlippen 28, 30 sind mit dem Basisabschnitt 20 und den Schenkelabschnitten 22, 24 koextrudiert. Das Dichtungsprofil 16 wird aus für Dichtungen geeigneten Elastomeren, beispielsweise EPDM, extrudiert. Zur Unterstützung des Extrusionsvorgangs und zur Erhöhung der Festigkeit des Basisabschnitts 20 weist dieser einen Zugfaden 50 auf.

Das erfindungsgemäße Dichtungsprofil 16 erlaubt eine zuverlässige Abdichtung und Lagerung der Fensterscheibe 14 und ist einfach zu realisieren.

### Bezugszeichenliste

- 10: Tür
- 12: Öffnungen
- 14: Fensterscheibe (verschiebbares Schließelement)
- 15: Front
- 16: Dichtungsprofil

- 20: Basisabschnitt
- 22: Schenkelabschnitt
- 24: Schenkelabschnitt
- 25: Zwischenraum
- 26: Dichtlippe (Bodenlippe)
- 28: Dichtlippe

- 30: Dichtlippe
- 31: Aussparung
- 32: Beflockung
- 34: Proximales Ende
- 36: Distales Ende
- 38: Vorsprünge

- 40: Haltelippe
- 42: Faden
- 44: Clip
- 46: Widerhaken

- 50: Zugfaden

## Patentansprüche

1. Dichtungsprofil mit einem im Wesentlichen U-förmigen Querschnitt zur Aufnahme und Abdichtung eines verschiebbaren Schließelements (14), insbesondere für ein Kraftfahrzeug, mit
einem Basisabschnitt (20) und
wenigstens einem Schenkelabschnitt (22, 24);
wobei von dem Basisabschnitt (20) und/oder dem Schenkelabschnitt (22, 24) wenigstens eine Dichtlippe (26, 28, 30) zur Abdichtung des Schließelements (14) abragt;
wobei die Dichtlippe (26, 28, 30) ein proximales Ende (34), das mit dem Basisabschnitt (20) und/oder dem Schenkelabschnitt (22, 24) verbunden ist, und ein distales Ende (36), das an das Schließelement (14) anlegbar ist, aufweist, **dadurch gekennzeichnet,**
**dass** die Dichtlippe (26, 28, 30) im Bereich des distalen Endes (36) mittels eines mechanischen Haltemittels (42, 44), das geeignet ist, von außen in das Dichtungsprofil (16) eingefügt zu werden, in einer vorbestimmten Lage an dem Basisabschnitt (20) und/oder dem Schenkelabschnitt (22, 24) wenigstens stellenweise fixiert ist.

2. Dichtungsprofil gemäß Anspruch 1, **dadurch gekennzeichnet, dass** das mechanische Haltemittel einen Faden (42) aufweist, mittels dem die Dichtlippe (26, 28, 30) an den Basisabschnitt (20) und/oder den Schenkelabschnitt (22, 24) angenäht ist.

3. Dichtungsprofil nach einem der Ansprüche 1 oder 2, **dadurch gekennzeichnet, dass** das mechanische Haltemittel einen Clip (44) aufweist.

4. Dichtungsprofil nach einem der Ansprüche 1 bis 3, **dadurch gekennzeichnet, dass** das mechanische Haltemittel (42, 44) lösbar ist.

5. Dichtungsprofil nach einem der Ansprüche 1 bis 4, **dadurch gekennzeichnet, dass** das proximale Ende (34) mit dem Basisabschnitt (20) und/oder dem Schenkelabschnitt (22, 24) stoffschlüssig verbunden ist.

6. Dichtungsprofil nach einem der Ansprüche 1 bis 5, **dadurch gekennzeichnet, dass** die Dichtlippe (26, 28, 30) eine in der Nähe des Basisabschnitts (20) zur Abdichtung einer Front (15) des Verschließelements (14) vorgesehene Bodenlippe (26) ist.

7. Dichtungsprofil nach einem der Ansprüche 1 bis 6, **dadurch gekennzeichnet, dass** die Dichtlippe (26, 28, 30) einen reibungsvermindernden Überzug, insbesondere eine Beflockung (32), aufweist.

8. Dichtungsprofil nach einem der Ansprüche 1 bis 7, **dadurch gekennzeichnet, dass** der Basisabschnitt (20) einen Zugfaden (50) aufweist.

9. Dichtungsprofil nach einem der Ansprüche 1 bis 8, **dadurch gekennzeichnet, dass** der Basisabschnitt (20) und/oder die Schenkelabschnitte (22, 24) und/oder die Dichtlippen (26, 28, 30) extrudiert sind.

10. Dichtungsprofil nach einem der Ansprüche 1 bis 9, **dadurch gekennzeichnet, dass** der Basisabschnitt (20) und/oder die Schenkelabschnitte (22, 24) und/oder die Dichtlippen (26, 28, 30) aus einem elastomeren Werkstoff, insbesondere aus Ethylen-Propylen-DienKautschuk, oder einem thermoplastischen Elastomer gefertigt sind.

## Claims

1. Sealing profile with an essentially U-shaped cross-section for accommodating and sealing a movable closing element (14), in particular for a motor vehicle, comprising
a base section (20) and
at least one limb section (22, 24);
wherein at least one sealing lip (26, 28, 30) for sealing the closing element (14) projects from the base section (20) and / or the limb section (22, 24);
wherein the sealing lip (26, 28, 30) has a proximal end (34) which is connected to the base portion (20) and / or the limb portion (22, 24), and a distal end (36) that can abut against the closing element (14) **characterised in that**
the sealing lip (26, 28, 30) is fixed at least in part in a predetermined position on the base section (20) and / or the limb section (22, 24) in the region of the distal end (36) by a mechanical retaining means (42, 44) which is suited for being introduced into the sealing profile (16) from the outside.

2. Sealing profile according to claim 1 **characterised in that** the mechanical retaining means comprises a thread (42) by means of which the sealing lip (26, 28, 30) is sewn to the base section (20) and / or the limb section (22, 24).

3. Sealing profile according to either claim 1 or 2 **characterised in that** the mechanical retaining means comprises a clip (44).

4. Sealing profile according to one of the claims 1 to 3 **characterised in that** the mechanical retaining means (42, 44) is detachable.

5. Sealing profile according to one of the claims 1 to 4 **characterised in that** the proximal end (34) is firmly bonded with the base section (20) and / or the limb sections (22, 24).

6. Sealing profile according to one of the claims 1 to 5 **characterised in that** the sealing lip (26, 28, 30) is a bottom lip (26) provided in the vicinity of the base section (20) for sealing an edge (15) of the closing element (14).

7. Sealing profile according to one of the claims 1 to 6 **characterised in that** the sealing lip (26, 28, 30) is provided with a friction-reducing covering, in particular flocking (32).

8. Sealing profile according to one of the claims 1 to 7 **characterised in that** the base section (20) is provided with a draw chord (50).

9. Sealing profile according to one of the claims 1 to 8 **characterised in that** the base section (20) and / or the limb section (22, 24) and / or the sealing lip (26, 28, 30) are extruded.

10. Sealing profile according to one of the claims 1 to 9 **characterised in that** the base section (20) and / or the limb sections (22, 24) and / or the sealing lips (26, 28, 30) are made of an elastomer material, in particular ethylene-propylene-diene rubber, or thermoplastic elastomer.

## Revendications

1. Profilé d'étanchéité avec une section transversale essentiellement en forme de U pour recevoir et étancher un élément de fermeture déplaçable (14), en particulier pour un véhicule automobile, comprenant
un tronçon de base (20), et
au moins un tronçon de branche (22, 24) ;
dans lequel au moins une lèvre d'étanchéité (26, 28, 30) destinée à étancher l'élément de fermeture (14) dépasse du tronçon de base (20) et/ou du tronçon de branche (22, 24) ;
dans lequel la lèvre d'étanchéité (26, 28, 30) comprend une extrémité proximale (34), qui est reliée au tronçon de base (20) et/ou au tronçon de branche (22, 24), et une extrémité distale (36) qui peut être appliquée sur l'élément de fermeture (14), **caractérisé en ce que**
la lèvre d'étanchéité (26, 28, 30) est fixée, au moins localement, dans la région de l'extrémité distale (36), au moyen d'un organe de maintien mécanique (42, 44) qui est approprié à être introduit de l'extérieur dans le profilé d'étanchéité (16), dans une position prédéterminée sur le tronçon de base (20) et/ou sur le tronçon de branche (22, 24).

2. Profilé d'étanchéité selon la revendication 1, **caractérisé en ce que** l'organe de maintien mécanique comprend un fil (42), au moyen duquel la lèvre d'étanchéité (26, 28, 30) est cousue sur le tronçon de base (20) et/ou sur le tronçon de branche (22, 24).

3. Profilé d'étanchéité selon l'une des revendications 1 ou 2, **caractérisé en ce que** l'organe de maintien mécanique comprend une pince (44).

4. Profilé d'étanchéité selon l'une des revendications 1 à 3, **caractérisé en ce que** l'organe de maintien mécanique (42, 44) est libérable.

5. Profilé d'étanchéité selon l'une des revendications 1 à 4, **caractérisé en ce que** l'extrémité proximale (34) est reliée en coopération de matières avec le tronçon de base (20) et/ou avec le tronçon de branche (22, 24).

6. Profilé d'étanchéité selon l'une des revendications 1 à 5, **caractérisé en ce que** la lèvre d'étanchéité (26, 28, 30) est une lèvre de fond (26) prévue au voisinage du tronçon de base (20) pour étancher une partie frontale (15) de l'élément de fermeture (14).

7. Profilé d'étanchéité selon l'une des revendications 1 à 6, **caractérisé en ce que** la lèvre d'étanchéité (26, 28, 30) comporte un revêtement réduisant la flexion, en particulier un flocage (32).

8. Profilé d'étanchéité selon l'une des revendications 1 à 7, **caractérisé en ce que** le tronçon de base (20) comprend un fil de traction (50).

9. Profilé d'étanchéité selon l'une des revendications 1 à 8, **caractérisé en ce que** le tronçon de base (20) et/ou les tronçons de branche (22, 24) et/ou les lèvres d'étanchéité (26, 28, 30) sont extrudés.

10. Profilé d'étanchéité selon l'une des revendications 1 à 9, **caractérisé en ce que** le tronçon de base (20) et/ou les tronçons de branche (22, 24) et/ou les lèvres d'étanchéité (26, 28, 30) sont fabriqués en un matériau élastomère, en particulier en caoutchouc éthylène-propylène-diène, ou en un élastomère thermoplastique.
